# NEUE EUROPÄISCHE PATENTSCHRIFT

(11) **EP 0 332 929 B2**
(45) Veröffentlichungstag und Bekanntmachung des Hinweises auf die Entscheidung über den Einspruch: **02.08.1995**
(45) Hinweis auf die Patenterteilung: 08.05.1991
(21) Anmeldenummer: 89103542.0
(22) Anmeldetag: 01.03.1989
(51) Int. Cl.: B01J 2/16, B01J 8/00

(54) **Verfahren und Vorrichtung zur Wirbelschichtsprühgranulation**
Process and apparatus for fluidized-bed granulation
Procédé et dispositif pour la granulation dans un lit fluidisé

(30) Priorität: 12.03.1988 DE 3808277
(43) Veröffentlichungstag der Anmeldung: 20.09.1989
(73) Patentinhaber: BAYER AG, 51368 Leverkusen (DE)
(72) Erfinder: Uhlemann, Hans, Dr., D-5650 Solingen (DE); Boeck, Reinhard, D-4044 Kaarst (DE); Daun, Hans, D-5090 Leverkusen (DE); Herold, Heiko, Dipl.Ing., D-4040 Neuss 21 (DE)

(56) Entgegenhaltungen:
- EP-A- 0 163 836
- EP-A- 0 298 169
- CH-A- 584 567
- DE-A- 3 248 504
- US-A- 1 861 248

## Beschreibung

Die Erfindung geht aus von einem Verfahren zur Granulatherstellung mit enger Korngrößenverteilung, bei dem das flüssige Ausgangsprodukt in eine Wirbelschicht gesprüht wird, das fertige Granulatkorn nach dem Prinzip der Zick-Zack-Sichtung klassierend aus dem Wirbelbett ausgetragen wird und der Sichtluftstrom in individuelle Einzelströme aufgeteilt wird, denen jeweils ein Zick-Zack-Sichtermodul und eine Sprühdüse zugeordnet wird. Außerdem betrifft die Erfindung eine Vorrichtung zur Durchführung des Verfahrens.

Bei modernen Verfahren der Wirbelschichtsprühgranulation wird das Granulat in einem Verfahrensschritt aus dem flüssigen Ausgangsprodukt hergestellt, wobei ein klassierender Austrag aus dem Wirbelbett erfolgt. Auf eine externe Sichtung und Mahlung des Überkorns kann daher verzichtet werden. Voraussetzung für dieses Verfahren ist ein sichtender Austrag, der die Partikel, die die Wunschkorngröße erreicht haben, aus dem Wirbelbett entläßt, Ein derartiges Verfahren ist z,B, in EP 163 836 beschrieben.

Aus der DE 25 55 917 ist ein Granulator mit kreisförmigem Querschnitt bekannt, bei dem die klassierende Austragsvorrichtung in der Mitte des Fluidisierungsbodens (Anströmboden) angeordnet ist. Der Anströmboden wird von einem Lochblech gebildet, das eine von innen nach außen zunehmende dichtere Perforierung hat. Dadurch wird erreicht, daß die Partikel an der Behälterwand aufsteigen und im Zentrum absinken.

Bei einem anderen in DE 16 67 217 beschriebenen Wirbelschichtgranulator wird zur lebhaften Durchmischung des Bettinhaltes eine sogenannte Strahlschicht (Spouted Bed) erzeugt Dadurch wird ein Partikelumlauf erzwungen, der dem oben beschriebenen genau entgegengesetzt ist Maßgebend für diesen Partikelumlauf ist die kreisrunde konische Verengung des Granulators am Boden. Am unteren Ende der konischen Verengung schließt sich ein Rohr an, über das die Fluidisierungsluft in den Granulator geleitet wird. Es entsteht in der Achse des Wirbelbettes ein Strahlkanal, in dem die Partikel nach oben gerissen werden. Oberhalb des Bettes fallen die Partikel aus dem Strahl heraus und in das Bett zurück. Es kommt so zu einem Partikelumlauf, bei dem der konusförmige Boden die Einschleusung der Partikel in den Strahlkanal begünstigt. Die Partikel, die die Wunschkorngröße erreicht haben, fallen in dem Luftzuführungsrohr nach unten und werden aus dem Granulator ausgeschleust. Dieser Granulatortyp hat sich bei relativ Weinen Querschnitten gut bewährt; bei großen Durchsätzen, die nur mit entsprechend großen Querschnitten zu erzielen sind, treten jedoch Probleme und Schwierigkeiten auf.

Der zuvor beschriebene Partikelumlauf, bei dem die Partikel in der Granulatorachse absinken, wird vorzugsweise mit einer Eindüsung des flüssigen Produktes von oben her kombiniert, während bei der Eindüsung von unten her ein in der Granulatorachse aufsteigender Partikelumlauf vorausgesetzt wird.

Es ist bekannt, daß die Maßstabsvergrößerung bei Gas-Feststoffölschichten grundsätzlich auf Schwierigkeiten stößt (siehe z.B. Aufbereitungstechnik Nr. 12(1974) Seite 670 bis 677). Die sonst bei verfahrenstechnischen Anlagen oft angewandte Ähnlichtkeitstheorie versagte in diesem Fall. Es wurde gefunden, daß bei größeren Wirbelschichtgranulatoren mit sichtendem Austrag die Partikel das Wirbelbett auf weiteren Wegen durchwandern und daher nicht mehr so häufig am Sichtungsprozeß teilnehmen. Dadurch steigt die Gefahr der Überkorn bildung. In ungünstigen Fällen können dabei auch grobe Körner im Wirbelbett absinken und sich in der Nähe des Anströmbodens konzentrieren. Im Extremfall kann dabei "die Fluidisation einschlafen". Die groben Körner setzen sich dann auf dem Anströmboden ab und vergrößern sich noch weiter durch Anlagerung weiterer Partikel. Die so entstehenden großen Aggregate (Klumpen) kommen in Kontakt mit der heißen Fluidisierluft und werden thermisch geschädigt. Darüber hinaus stören sie die Durchströmung des Bettes. Unter Umständen kann sich diese Störung sogar zu einem totalen Zusammenbruch der Wirbelschicht ausweiten. Die Größe der im Bett enthaltenen Partikel muß daher in kurzen Abständen überprüft werden, wenn ein störungsfreier Betrieb aufrechterhalten werden soll.

Hier setzt die Erfindung an.

Es liegt die Aufgabe zugrunde, ein Verfahren zur Wirbelschichtsprühgranulation mit klassierendem Austrag zu entwickeln, bei dem die relativ groben, unabhängig von der Größe des Apparates bereits nahezu auf Wunschkorngröße angewachsenen Granulate nicht mit abnehmender, sondern eher mit zunehmender Häufigkeit am Sichtungsprozeß teilnehmen, um die oben erwähnten Betriebsstörungen auszuschließen und auch Maßstabsprobleme zu vermeiden.

Diese Aufgabe wird - ausgehend von dem eingangs beschriebenen Verfahren - erfindungsgemäß dadurch gelöst, daß die Granulatkörner durch jeweils einen auf den Zick-Zack-Sichtermodul (7, 17) aufgesetzten Rückführungsschacht (9, 18) in zueinander parallelen oder radialen Zonen innerhalb einer auf die Anströmbodenzone beschränkten Schicht ins Wirbelbett (4) zurückgeschleudert werden, und eine Quervermischung der ausgeblasenen Granulatkörner zwischen den einzelnen Zonen der Granulatkammer vermieden wird, wobei die relativ kleinen Körner in relativ großer Entfernung und die großen, bereits bis nahe an die Austragsgröße angewachsenen Körner in relativ geringer Entfernung vom Rückführungsschacht (9, 18) auftreffen und daß gegebenenfalls den individuellen Einzelströmen eine Sprühdüsengruppe zugeordnet ist.

Die modulare Unterteilung der Granulationskammer ermöglicht einen definierten Partikelumlauf, bei dem die feinen Partikel weiter außen gezielt in das Bett zurückgeschleudert werden, während die gröberen Partikel in der Nähe des Rückführungsschachtes ins Wirbelbett zurückfallen und dadurch häufiger gesichtet werden. Die Quervermischung zwischen den einzelnen Zonen der Granulationskammer wird durch das gezielte Ausblasen der Partikel aus dem Rückführungsschacht vermieden.

Der zur Durchführung des Verfahrens dienende Wirbelschichtgranulator ist erfindungsgemäß in der Weise modifiziert, daß der für den klassierenden Austrag verwendete Zick-Zack-Sichter modulartig unterteilt ist und daß jedem Zick-Zack-Sichtermodul mindestens eine Sprühdüse am Anströmboden zugeordnet ist und auf jeden Zick-Zack-Sichtermodul an der Anschlußstelle zum Anströmboden ein Rückführungsschacht aufgesetzt ist.

Vorteilhaft ist ferner jeder Zick-Zack-Sichtermodul an der Anschlußstelle zum Anströmboden mit einem Unterlaufwehr versegen, so daß an der Eintrittstelle zum Zick-Zack-Sichter ein Rückstau der Körner auftritt,

Gemäß einer bevorzugten Ausführungsform haben der Wirbelschichtgranulator und die Zick-Zack-Sichtermodule einen rechteckförmigen Querschnitt. Dabei ist die Breite B des Wirbelschichtgranulators gleich der Länge 1 eines Zick-Zack-Sichterkanals und die Länge L des Wirbelschichtgranulators gleich einem ganzzahligen Vielfachen der Breite b des Zick-Zack-Sichterkanals.

Eine alternative Ausführung ist dadurch gekennzeichnet, daß dem Zick-Zack-Sichtermodul nur eine Sprühdüse zugeordnet ist, wobei der Sichterkanal ringförmig ausgebildet ist und daß der auf ihn aufgesetzte Rückführungsschacht die Sprühdüse konzentrisch umschließt.

Zur Abluftreinigung sind zweckmäßig oberhalb der zu einem Zick-Zack-Sichtermodul gehörenden Sprühdüsen Filterelemente zur Abluftreinigung angeordnet.

Mit der Erfindung werden folgende Vorteile erzielt.

Aufgrund der modularen, zonenweise aufgeteilten Sichtung und Partikelrückführung ins Wirbelbett und der daraus resultierenden definierten Flugwege mit kurzer Reichweite für die groben Partikel und großer Reichweite für das Unterkorn können eine Überkornbildung und die daraus resultierenden oben beschriebenen Betriebsstörungen des Wirbelbetts vermieden werden. Ein weiterer wesentlicher Vorteil liegt darin, daß man aufgrund der modularen Bauweise Granulatoren mit sehr großen Abmessungen bauen kann, wenn entsprechend hohe Durchsätze gefordert werden. Die bisher auftretenden Schwierigkeiten bei der Maßstabsvergrößerung von Wirbelschichtgranulatoren (Scaling up) sind damit behoben. Der definierte Partikelumlauf im Wirbelbett führt außerdem zu einer weiteren Verbesserung der Klassierschärfe beim Austrag; d.h. es lasen sich noch engere Korngrößenverteilungen erzielen.

Im folgenden werden Ausführungsbeispiele der Erfindung anhand von Zeichnungen erläutert. Es zeigen
Fig. 1 einen Schnitt durch einen Wirbelschichtgranulator mit einem Zick-Zack-Sichtermodul und den dazugehörigen Sprühdüsen
Fig. 2 ein Zick-Zack-Sichtermodul mit Sprühdüsen und Anströmboden in perspektivischer Darstellung, wobei der Sichterquerschnitt der besseren Anschaulichkeit wegen um 90° gedreht dargestellt ist.
Fig. 3 die Modulstruktur des Granulators in Draufsicht
Fig. 4 einen Eindüsenmodul mit Sprühdüse und konzentrischem Zick-Zack-Sichter
Fig. 5a die Anordnung von Eindüsenmodulen bei der Realisierung eines wirbelschichtgranulators mit Rechteckquerschnitt und
Fig. 5b die Anordnung der Eindüsenmodule bei Realisierung eines Kreisquerschnitts.

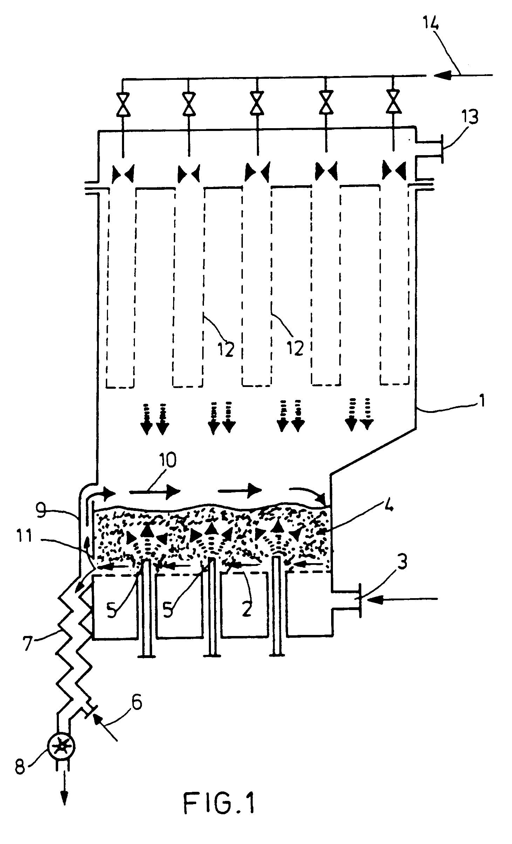

Der in Fig. 1 schematisch dargestellte Wirbelschichtgranulator besteht aus einem Gehäuse 1 mit einem Anströmboden 2, über dem mittels eines Fluidisiergases 3 ein Wirbelbett 4 aufrechterhalten wird. Das flüssige Ausgangsmaterial, aus dem das Granulat hergestellt werden soll, wird durch die Zweistoffdüsen 5 von unten her ins Wirbelbett eingesprüht. Der Durchmesser der Partikel im Wirbelbett nimmt aufgrund des aufgesprühten und verfestigen Materials schalenförmig immer weiter zu, bis sie den Sichtluftstrom 6 im Zick-Zack-Sichtermodul 7 passieren können und durch die Zellenradschleuse 8 ausgetragen werden. Die kleineren, noch unterhalb der Wunschkorngröße liegenden Partikel werden dagegen vom Sichtluftstrom durch den Rückführungsschacht 9 nach oben getragen und horizontal zurück ins Wirbelbett 4 geschleudert (Pfeile 10). Dabei fallen die etwas gröberen und schwereren Partikel in der Nähe des Rückführungsschachtes 9 herunter, während die feineren Partikel weiter nach außen geschleudert werden. Dies hat zur Folge, daß die relativ groben, bereits bis nahe an die Wunschkorngröße angewachsenen Partikel in kürzeren Zeitabständen das Unterlaufwehr 11 passieren und am Sichtungsprozeß teilnehmen, während die weiter außen abgelegten feinen Partikel über die ganze Modultiefe zurückwandern müssen. Während ihrer Wanderung durch das Wirbelbett wird ihr Wachstum durch Ansaugung und Benetzung im Bereich der Zweistoffdüsen 5 gefördert Die modulare Unterteilung in Granulatorzonen bzw. Segmente führt also zu definierten Wachstums- und Austragsbedingungen. Sie können am Einzelsegment problemlos optimiert werden und gelten dann auch für den gesamten Produktionsapparat.

Oberhalb des Wirbelbetts 4 sind in jedem Segment Filterschläuche 12 zur Reinigung der aus dem Granulator abgezogenen Abluft 13 angebracht. Die Filterschläuche 12 können mit Spülgas 14 beaufschlagt und von dem anhaftenden Feinstaub befreit werden. Der Filterstaub ergießt sich beim Abreinigen lawinenartig in das Wirbelbett 4, wo er wieder in den Granulationsprozeß mit eingebunden wird.

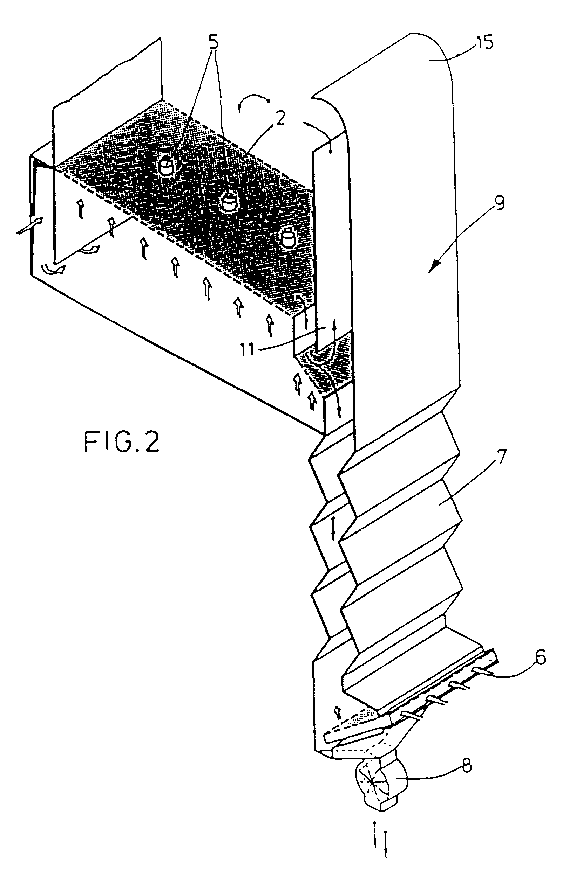

Aus Fig. 2 ist der Aufbau eines Zick-Zack-Sichtermoduls mit der dazugehörigen Sprühdüsengruppe 5 und derzugeordneten Anströmbodenzone 2 im Detail ersichtlich. Der mit einem gekrümmten Leitblech 15 ausgestattete, aufdas Zick-Zack-Sichtermodul 7 aufgesetzte Rückführungsschacht 9 sorgt dafür, daß das Unterkorn annähernd horizontal und innerhalb einer auf die Anströmbodenzone beschränkten Schicht ins Wirbelbett zurückgeblasen wird. Es tritt also keine Quervermischung ein ; d.h. die Partikel fliegen nur zu einem geringen Teil in benachbarte Zonen. Der in Fig. 2 dargestellte Modul kann also verfahrenstechnisch als selbständige Einheit angesehen werden.

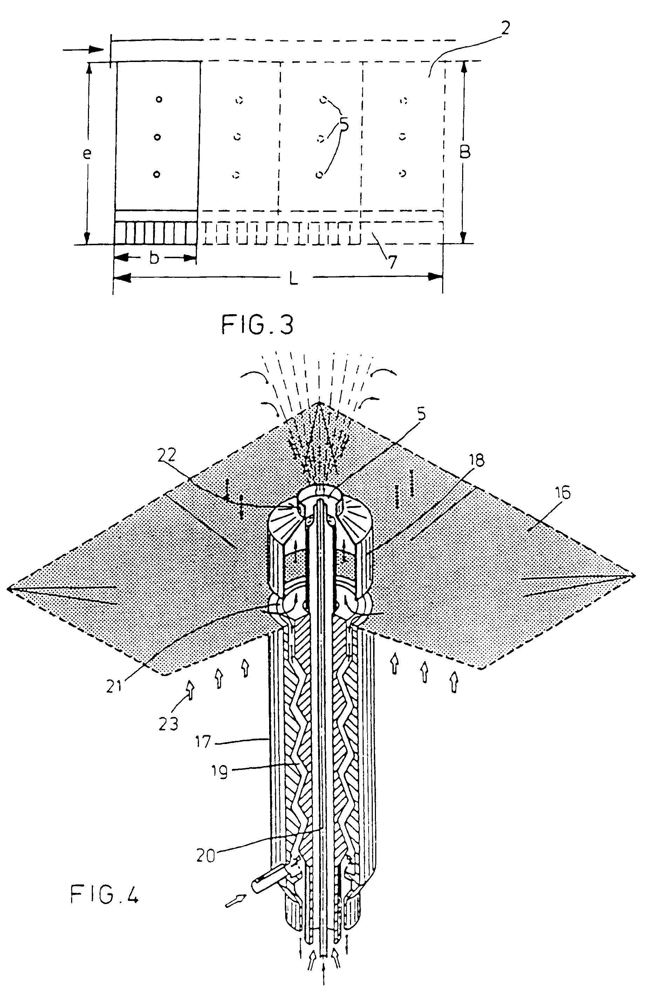

Gemäß Fig. 3 sind solche Einheiten zu einer großen Wirbelschichtgranulieranlage mit Rechteckquerschnitt zusammengesetzt. Bei entsprechender Dimensionierung kann der vom gewünschten Durchsatz her vorgegebene Granulatorquerschnitt ohne Schwierigkeiten lückenlos überdeckt werden. Zu diesem Zweck wird der in Fig. 2 dargestellte Modul so dimensioniert, daß die Breite B des Wirbelschichtgranulators gleich der Länge l eines Zick-Zack-Sichterkanals bzw. der dazugehörigen Anströmbodenzone und die Länge L des Wirbelschichtgranulators gleich einem ganzzahligen Vielfachen der Breite b des Zick-Zack-Sichterkanals ist.

Eine alternative Ausführung der Erfindung kann mit dem Eindüsenmodul nach Fig. 4 bis 5 realisiert werden. Der Modul wird hier gebildet von einer einzigen Sprühdüse 5, die im Zentrum eines rechteckförmigen oder sechseckförmigen Anströmbodenelements 16 angeordnet ist sowie von einem ringförmigen Zick-Zack-Sichter 17 und einem an der Anschlußstelle des Anströmbodens 16 aufgesetzten, die Sprühdüse 5 konzentrisch umschließenden Rückführungsschacht 18. Der ringförmige Zick-Zack-Sichter kanal 19 umschließt hier auch die Zuleitungen 20 für die Zweistoffsprühdüse 5(Gas und flüssiges Ausgangsmaterial). Das zu sichtende Granulat wird ähnlich wie bei der Ausführung nach Fig. 1 und 2 durch einen Ringspalt 21 (Unterlaufwehr) zwischen dem Rückführungsschacht 18 und dem Sichtermodul 17 angesaugt. Der von der Zweistoffdüse 5 erzeugte Sog wird unterstützt durch die kragenförmige Querschnittsverengung 22 am Auslaß des Rückführungsschachtes 18. Das angesaugte Unterkorn wird auf diese Weise unmittelbar in den Sprühstrahl gefördert und dort mit der Granulierflüssigkeit benetzt. Dadurch werden wiederum die Wachstumsbedingungen für das Unterkorn gezielt verbessert. Aus dem Sprühstrahl fallen dann die benetzten Partikel entgegen dem Fluidisierluftstrom 23 nach unten, wobei sich die aufgetragene flüssige Schale auf dem Partikel verfestigt und auf diese Weise ein größeres Granulatkorn entsteht. Schließlich werden die Partikel nach Überquerung des Anströmbodens 16 erneut dem ringförmigen Zick-Zack-Sichtermodul 17 zugeführt. Hinsichtlich der Flugbahnen der Partikel sind die gleichen physikalischen Kriterien maßgebend wie bei der Ausführung nach Fig. 1 und 2 ; d.h. die relativ großen, schwereren Partikel treffen in einem relativ engen Umkreis vom Zick-Zack-Sichtermodul 17 auf das Wirbelbett auf, während die kleinen Partikel weiter nach außen geschleudert werden. Dabei gelten für jede radiale Zone die gleichen Bedingungen; die Anordnung ist hinsichtlich ihrer Konstruktion und ihrer Wirkungsweise rotationssymmetrisch.

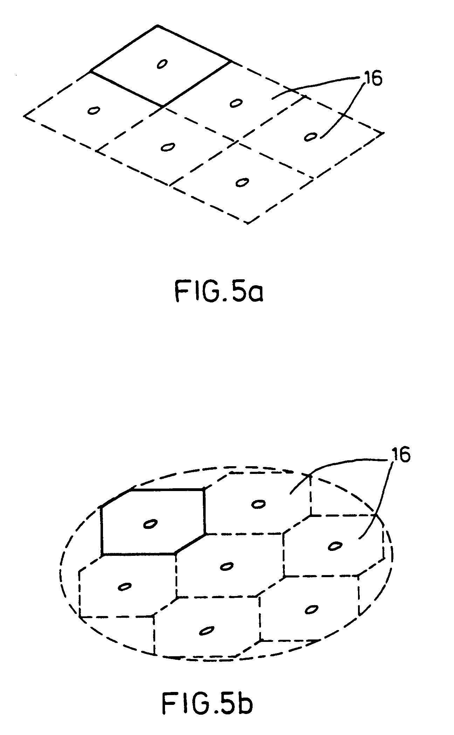

Dies erlaubt das Zusammenfügen von Granulatormodulen zu einer größeren Querschnittsfläche. So ist in Fig. 5a angedeutet, wie man zur Überdeckung eines rechteckförmigen Wirbelschichtgranulatorquerschnitts am besten Eindüsenmodule nach Fig. 4 mit einem rechteckförmigen oder quadratischen Anströmbodenelement 16 benutzt, während man bei einem kreisförmigen Wirbelschichtgranulator zweckmäßig eine sechseckige Basisfläche für das Anströmbodenelement zugrundelegt (siehe Fig. 5b). Kreisförmige Granulatoren sind immer dann von Vorteil, wenn die Apparatur druckfest ausgeführt werden muß.

Analog zu der Ausführung nach Fig. 1 bis 2 können über einem Zick-Zack-Sichtermodul nach Fig. 4 jeweils Filterelemente zur Abluftreinigung eingebaut werden.

## Patentansprüche

1. Verfahren zur Granulatherstellung mit enger Korngrößenverteilung, bei dem das flüssige Ausgangsprodukt in eine Wirbelschicht (4) gesprüht wird, das fertige Granulatkorn nach dem Prinzip der Zick-Zack-Sichtung klassierend aus dem Wirbelbett (4) ausgetragen wird und der Sichtluftstrom in individuelle Einzelströme (6) aufgeteilt wird, denen jeweils ein Zick-Zack-Sichtermodul (7,17) und eine Sprühdüse (5) zugeordnet wird, dadurch gekennzeichnet, daß die Granulatkörner durch jeweils einen auf den Zick-Zack-Sichtermodul (7,17) aufgesetzten Rückführungsschacht (9,18) in zueinander parallelen oder radialen Zonen innerhalb einer auf die Anströmbodenzone beschränkten Schicht ins Wirbelbett (4) zurückgeschleudert werden, und eine Quervermischung der ausgeblasenen Granulatkörner zwischen den einzelnen Zonen der Granulatkammer vermieden wird, wobei die relativ kleinen Körner in relativ großer Entfernung und die großen, bereits bis nahe an die Austragsgröße angewachsenen Körner in relativ geringer Entfernung vom Rückführungsschacht (9,18) auftreffen und daß gegebenenfalls den individuellen Einzelströmen eine Sprühdüsengruppe zugeordnet ist.

2. Vorrichtung zur Durchführung des Verfahrens nach Anspruch 1 mit einem Sprühdüsen (5) zum Eintrag des flüssigen Ausgangsproduktes aufweisenden Wirbelschichtgranulator, an dessen Anströmboden (2) ein Zick-Zack-Sichter zum klassierenden Austrag des fertigen Granulatkorns angeschlossen ist, und der Zick-Zack-Sichter modulartig unterteilt ist und jedem Zick-Zack-Sichtermodul (7, 17) mindestens eine Sprühdüse (5) am Anströmboden (2,16) zugeordnet ist, dadurch gekennzeichnet daß auf jeden Zick-Zack-Sichtermodul (7, 17) an der Anschlußstelle zum Anströmboden (2, 16) ein Rückführungsschacht (9, 18) aufgesetzt ist.

3. Vorrichtung nach Anspruch 2, dadurch gekennzeichnet, daß jeder Zick-Zack-Sichtermodul (7, 17) an der Anschlußstelle zum Anströmboden (2, 16) mit einem Unterlaufwehr (11, 21) versehen ist.

4. Vorrichtung nach Anspruch 2 bis 3, dadurch gekennzeichnet daß der Wirbelschichtgranulator und die Zick-Zack-Sichtermodule (7) rechteckförmigen Querschnitt haben und die Breite B des Wirbelschichtgranulators gleich der Länge l eines Zick-Zack-Sichterkanals und die Länge L des Wirbelschichtgranulators gleich einem ganzzahligen Vielfachen der Breite b des Zick-Zack-Sichterkanals ist.

5. Vorrichtung nach Anspruch 2 bis 3, dadurch gekennzeichnet, daß dem Zick-Zack-Sichtermodul (17) nur eine Sprühdüse (5) zugeordnet ist und daß der Sichterkanal (19) ringförmig ausgebildet ist und der auf ihn aufgesetzte Rückführungsschacht (18) die Sprühdüse (5) konzentrisch umschließt.

6. Vorrichtung nach Anspruch 2, dadurch gekennzeichnet, daß oberhalb der einem Zick-Zack-Sichtermodul (7, 17) zugeordneten Sprühdüsen (5) Filterschläuche (12) zur Abluftreinigung angeordnet sind.

## Claims

1. Process for producing granules with a close grain size distribution, wherein the liquid raw product is sprayed into a fluidised bed (4), the finished granule grain is discharged in a graded manner using the principle of zigzag sorting from the fluidised bed (4) and the sorting air current is subdivided into individual single currents (6) with each of which a zigzag sorting module (7, 17) and a spray nozzle (5) are associated, characterised in that the granule grains are flung back into the fluidised bed (4) through in each case a return shaft (9, 18) mounted on the zigzag sorting module (7, 17) in parallel or radial zones inside a layer restricted to the approach-flow base zone and cross mixing of the expelled granule grains between the individual zones of the granulation chamber is avoided, with the relatively small grains striking at a relatively large distance and the large grains which have already grown almost up to the discharge size striking at a relatively small distance from the return shaft (9, 18), and that, if need be, a spray nozzle group is associated with the individual single currents.

2. Apparatus for effecting the process according to claim 1 having a fluidised bed granulator which has spray nozzles (5) for introducing the liquid raw product and to whose approach-flow base (2) a zigzag sorter is connected for the graded discharge of the finished granule grain, with the zigzag sorter being modularly divided and at least one spray nozzle (5) being associated at the approach-flow base (2, 16) with each zigzag sorter (7, 17), characterised in that a return shaft (9, 18) is mounted on each zigzag sorting module (7, 17) at the connection point to the approach-flow base (2, 16).

3. Apparatus according to claim 2, characterised in that each zigzag sorting module (7, 17) is provided with an underflow weir (11, 21) at the connection point to the approach-flow base (2, 16).

4. Apparatus according to claims 2 to 3, characterised in that the fluidised bed granulator and the zigzag sorting modules (7) are rectangular in cross-section and the width B of the fluidised bed granulator is equal to the length l of a zigzag sorting channel and the length L of the fluidised bed granulator is equal to an integral multiple of the width b of the zigzag sorting channel.

5. Apparatus according to claims 2 to 3, characterised in that only one spray nozzle (5) is associated with the zigzag sorting module (17) and that the sorting channel (19) is annular and the return shaft (18) mounted thereon concentrically encloses the spray nozzle (5).

6. Apparatus according to claim 2, characterised in that filter tubes (12) for exhaust air decontamination are disposed above the spray nozzles (5) associated with a zigzag sorting module (7, 17).

## Revendications

1. Procédé pour l'obtention d'un produit granulé à répartition étroite des grosseurs de grains, dans lequel la matière liquide de départ est pulvérisée dans un lit fluidisé (4), le produit granulé final est déchargé du lit fluidisé (4) en étant calibré selon le principe du triage en Zigzag et le courant d'air de triage est divisé en courants élémentaires individuels (6) à chacun desquels sont adjoints un module sélecteur (7, 17) et une buse de pulvérisation (5), caractérisé en ce que les grains du produit granulé sont refoulés dans le lit fluidisé (4) par la force centrifuge à travers un puits de recyclage (9, 18) installé sur chacun des modules sélecteurs en zigzag (7, 17) dans des zones parallèles entre elles ou radiales à l'intérieur d'une couche limitée à la zone du fond de soufflage, et un mélange croisé des grains soufflés du produit granulé entre les zones individuelles de la chambre du produit granulé, les grains relativement petits atteignant une distance relativement grande et les gros grains déjà développés jusqu'au voisinage de la grosseur de décharge atteignant une distance relativement faible du puits de recyclage (9, 18), et par le fait qu'un groupe de buses de pulvérisation est éventuellement adjoint aux divers courants individuels.

2. Dispositif pour la mise en oeuvre du procédé suivant la revendication 1, comportant un granulateur à lit fluidisé équipé de buses de pulvérisation (5) servant à l'introduction de la matière liquide de départ, au fond (2) de soufflage duquel est raccordé un sélecteur en zigzag pour la décharge avec calibrage du produit granulé final, et le sélecteur en zigzag présente une subdivision modulaire et à chaque module (7, 17) du sélecteur en zigzag est affectée au moins une buse de pulvérisation (5) au fond (2, 16) de soufflage, caractérisé en ce qu'un puits de recyclage (9, 18) est disposé sur chaque module (7, 17) du sélecteur en zigzag au point de raccordement au fond (2, 16) de soufflage.

3. Dispositif suivant la revendication 2, caractérisé en ce que chaque module (7, 17) du sélecteur en zigzag est pourvu d'un déversoir (11, 21) à écoulement inférieur au point de raccordement au fond (2, 16) de soufflage.

4. Dispositif suivant les revendications 2 et 3, caractérisé en ce que le granulateur à lit fluidisé et les modules (7) du sélecteur en zigzag ont une section transversale rectangulaire et la largeur B du granulateur à lit fluidisé est égale à la longueur l d'un canal du sélecteur en zigzag et la longueur L du granulateur à lit fluidisé est égale à un multiple entier de la largeur b du canal du sélecteur en zigzag.

5. Dispositif suivant les revendications 2 et 3, caractérisé en ce qu'une seule buse de pulvérisation (5) est affectée au module (17) du sélecteur en zigzag et en ce que le canal (19) du sélecteur est réalisé de forme annulaire et le puits de recyclage (18) disposé sur ce canal entoure concentriquement la buse de pulvérisation (5).

6. Dispositif suivant la revendication 2, caractérisé en ce que des tuyaux souples filtrants (12) sont disposés au-dessus des buses de pulvérisation (5) affectées à un module (7, 17) du sélecteur en zigzag pour purifier l'air sortant.
